# EUROPEAN PATENT APPLICATION

(11) **EP 1 413 260 A1**
(43) Date of publication of application: **28.04.2004**
(21) Application number: 02751821.6
(22) Date of filing: 01.08.2002
(51) Int. Cl.: A61C 13/083, A61K 6/02

(54) **DENTAL CERAMIC FRAME, PREPARATION OF THE SAME AND DENTAL PROSTHESIS COMPRISING THE SAME**

(30) Priority: 03.08.2001 JP 2001236531
(71) Applicant: NORITAKE CO., LIMITED, Nagoya-shi, Aichi 451-8501 (JP); Japan Fine Ceramics Center, Nagoya-shi 456-8587 (JP)
(72) Inventor: BAN, Kiyoko, c/o Noritake Dental Supply Co., Ltd., Nagoya-shi, Aichi 451-8501 (JP); SAKAKIBARA, T., Noritake Dental Supply Co., Ltd., Nagoya-shi, Aichi 451-8501 (JP); YASUTOMI, Y., c/o Japan Fine Ceramics Center, Nagoya-shi, Aichi 456-8587 (JP); TAKIGAWA, Y., c/o Japa Fine Ceramics Center, Nagoya-shi, Aichi 456-8587 (JP); ABE, Hiroya, c/o Japan Fine Ceramics Center,, Nagoya-shi, Aichi 456-8587 (JP)
(74) Representative: Bannerman, David Gardner
(86) International application number: PCT/JP2002/007847
(87) International publication number: WO 2003/013387

(57) **Abstract**

The present invention provides a dental ceramic frame (10, 20, 30, 50) which is superior in terms of mechanical strength characteristics compared with conventional bridge-shaped ceramic frames that have glass joining layers or frames consisting of porous ceramics impregnated with glass.

This dental ceramic frame (10, 20, 30, 50) comprises two or more core elements (11, 12, 13, 21, 22, 23, 31, 32, 33, 51, 52, 53) disposed in series, and adjacent core elements are joined to each other to form an integral unit. This dental ceramic frame is characterized in that the content of the glass component in the joining portions (14, 15, 26, 27, 34, 35) between the core elements is 10 wt% or less.

## Description

### TECHNICAL FIELD

The present invention relates to a ceramic molding utilized in the dental field, and more particularly relates to a dental ceramic frame, the utilization of the same, and a technique for manufacturing this frame.

### BACKGROUND ART

In cases where portions of natural teeth are lost or several natural teeth are lost due to accidents or disorders such as dental caries or the like, dental prostheses are utilized. For example, depending on the shape of the missing portion of the tooth (the portion for which repair is desired), a crown-shaped prosthesis (hereafter referred to simply as a "crown"), a bridge-shaped prosthesis (hereafter referred to simply as a "bridge") or the like is used.

In the case of these dental prosthesis such as crowns, bridges and the like, a noble metal frame (or core) consisting of gold, platinum, palladium or the like, or a ceramic frame (or core) consisting of alumina, zirconia, lithium disilicate glass or the like, is constructed as the main body. Then, a porcelain material or resin is applied to such a frame while causing this material to conform to the shape of the portion of the tooth that is to be repaired, and the manufacture of the prosthesis is completed by sintering or hardening this applied substance.

In recent years, ceramic materials have becomes more desirable than noble metal materials as the materials of the abovementioned frames from the standpoints of improved cosmetic properties, affinity for biological tissues and safety. In order to achieve even further popularization of such ceramic frames, there is a demand for even further improvement of the mechanical strength and dimensional precision (finishing of a product with a desired size) of ceramic frames.

In regard to such requirements, techniques in which the strength is improved by impregnating a porous ceramic material with glass, and the sintering shrinkage rate of the sintered body (ceramic frame) is reduced by lowering the sintering temperature, so that the dimensional precision of the sintered body is improved, have been disclosed in (for example) Japanese Patent Application Laid-Open No. 5-58835, Japanese Patent Application Laid-Open No. 5-186310, Japanese Patent Application Laid-Open No. 6-285091 (Japanese Patent No. 2645688) and Japanese Patent Application Laid-Open No. 11-47157. Furthermore, a material with a relatively low sintering temperature and a low expansion coefficient which is used to form ceramic frames (cores) is described in Japanese Patent Application Laid-Open No. 2000-139959.

A certain improvement in dimensional precision and improvement in mechanical strength can be realized by using the techniques described in these patents. However, the fact that glass components are contained at a relatively high rate is an impediment, and there are limits to how far the mechanical strength can be improved.

Crown ceramic frames consisting of densely textured high-strength ceramic sinters, and methods for manufacturing such frames, are described in U.S. Patent No. 5080589 and U.S. Patent No. 5106303. However, the ceramic frame manufacturing techniques involved in these U.S. patents require the manufacture of molded bodies that take the sintering shrinkage rate into account, and precision workmanship prior to the main sintering process. For such reasons, it is difficult to apply these techniques to the manufacture of complicated structures such as ceramic frames used for bridges.

Meanwhile, a bridge ceramic frame which uses a plurality of densely textured ceramic sintered bodies as constituent members, and which is formed by bonding these constituent members to each other using a glass composition, is described in International Patent Application Laid-Open No. W099/13795. A similar technique is also described in Japanese Patent Application Laid-Open No. 2000-157560. Specifically, in this publication, a bridge is described in which two adjacent crowns or bridge elements are connected via a joining member, and a bridge is formed by fastening the above-mentioned connecting member to the crowns or bridge elements using molten glass.

However, the bridges or bridge frames described in these publications are all structures in which two or more adjacent crowns or bridge elements are joined to each other using a glass material. Accordingly, the strength of the above-mentioned joining portion (glass joining layer) is much weaker than the strength of the above-mentioned crowns or bridge elements themselves. Moreover, stress corrosion tends to occur.

### DISCLOSURE OF THE INVENTION

It is an object of the present invention to realize an improvement in the mechanical strength of dental ceramic frames that has been desired in the past. It is also an object of the present invention to provide dental ceramic frame (especially a bridge ceramic frame) in which an improved strength is realized.

It is another object of the present invention to provide a method and material for manufacturing such a ceramic frame. Moreover, it is another object of the present invention to provide a dental prosthesis such as a bridge or the like which contains such a ceramic frame. It is another object of the present invention to realize both an increase in mechanical strength and high dimensional precision in such a ceramic frame.

One dental ceramic frame provided by the present invention has two or more core elements which are arranged in series (i.e., arranged in a single continuous row), and at least one joining portion (joining part) which is formed between these core elements so that adjacent core elements are joined together to form an integral unit. This joining portion is characterized in that the content of the glass component is 10 wt% or less (preferably 5 wt% or less).

In the present specification, the term "dental ceramic frame" refers to a ceramic molded body which forms the supportive structure of a dental prosthesis, and which is a principal constituent member that imparts physical strength to this prosthesis. For example, in the case of a dental prosthesis such as a bridge or the like, this term refers to a member constituting a base to which porcelain, a resin or the like is applied (i.e., on which such a material is built up).

In the present specification, the term "core element" is a term which indicates a main constituent part of a dental ceramic frame; individual core elements (core parts) can be clearly distinguished according to differences in the use and/or mounting position of such core elements when these elements are mounted in the oral cavity. For example, in the case of a ceramic frame that is used to construct a so-called three-crown bridge, three core elements may typically be contained in this frame. For example, these three core elements may be distinguished as elements that are respectively mounted on the left and right supporting teeth (abutment teeth), and a central element in which a pontic is formed between the left and right elements.

A dental ceramic frame with the above-mentioned construction has a structure in which adjacent core elements are joined to each other to form an integral unit; this frame is capable of exhibiting a high mechanical strength. The glass component content of the joining portions that are present between the respective core elements may be a conspicuously lower value than that seen in conventional dental ceramic frames. Accordingly, the rate of occurrence and degree of progression of stress corrosion can be conspicuously reduced compared to the above-mentioned parts joined by conventional glass materials (i.e., joining portions with a high glass component content).

In particular, a frame which is characterized in that the joining portions contain substantially no sodium (Na), potassium (K), lithium (Li) or boron (B) as glass components is desirable. The reason for this is that a glass containing these elements has a conspicuously small resistance to stress corrosion in water.

One desirable dental ceramic frame provided by the present invention contains a joining assistant component in at least the above-mentioned joining portion(s). Here, the term "joining assistant component" refers to a metal oxide can assist in joining (typically diffusion joining (diffusion bonding) that occurs when heating is applied) between ceramic structures (structural bodies) in cases where this oxide is interposed between the internal parts and/or surface layer parts of ceramic structures. Typical examples of such joining assistant components include titanium oxide, silicon oxide, niobium oxide and germanium oxide. A frame containing one or two or more of these metal oxides is especially preferable.

A dental ceramic frame containing such a joining assistant component can be appropriately manufactured using a dental ceramic frame forming material that comprises mainly a ceramic powder, and that contains a joining assistant agent (for example, one compound or two or more compounds selected from the group consisting of titanium oxide, silicon oxide, niobium oxide and germanium oxide) at a content corresponding to 0.1 to 10 wt% (typically 1 to 10 wt%) of the amount of the ceramic powder. Specifically, such a dental ceramic frame forming material is provided as one aspect of the present invention.

In the present specification, the term "joining assistant agent" refers to an additive that is substantially constructed from a substance capable of forming the above-mentioned joining assistant component in the ceramic frame. The above-mentioned metal oxides and metal compounds capable of forming these oxides when heated to a high temperature (for example, metal alkoxides) are typical examples of compounds included in the term "joining assistant agent" used herein.

A dental ceramic frame that is constructed from a relatively hard ceramic is desirable as the dental ceramic frame provided by the present invention. For example, a ceramic frame constructed from zirconia, alumina, mullite, spinel or the like is desirable. Frames manufactured from ceramics formed by compounding two or more of these materials are especially desirable.

In order to realize a higher mechanical strength, a ceramic frame in which both the above-mentioned two or more core elements and the joining portions between the core elements have substantially the same composition is desirable. Typically, it is desirable that the glass component content not differ between the central portions of the core elements and the joining portions (e.g., in the case of a three-crown bridge, between the central region of the core element positioned in the center and the regions corresponding to the joining portions present on the left and right sides of this core element positioned in the center). It is desirable that the glass content be 10 wt% or less throughout the ceramic frame as a whole. It is especially desirable that this content be 5 wt % or less. In the case of a ceramic frame containing the above-mentioned joining assistant component, this may be a ceramic frame that contains the above-mentioned joining assistant component throughout the ceramic frame as a whole (e.g., a ceramic frame that contains the joining assistant component at the same content throughout the frame as a whole).

Furthermore, a method for manufacturing the above-mentioned dental ceramic frame is provided as another aspect of the present invention. This method comprises (a) a step in which two or more ceramic core members are individually prepared, (b) a step in which at least portions of the facing surfaces of adjacent core members are caused to adhere tightly to each other so that these members are disposed in series (i.e., arranged in a single continuous row), and (c) a step in which the two or more core members disposed in series are joined to each other by heating and/or pressing so that these members are formed into an integral unit.

If this method is used, a bridge-form dental ceramic frame which has two or more core members as respective core elements and which realizes a high mechanical strength can be manufactured. In the case of this method, since the core members are individually formed beforehand (typically, the method comprises a molding step involving molding from a powder material, and a firing step in which the resulting molded body is fired), and since a ceramic frame is then formed by combining these core members into an integral unit, a ceramic frame with high dimensional precision can be manufactured.

Preferably, a treatment which flattens (and more preferably smoothes) the surfaces of the core members that are caused to adhere tightly to each other is performed, and/or a treatment which applies a joining assistant agent to these surfaces is performed, before the above-mentioned core members are disposed in series. In cases where the above-mentioned surfaces (portions) that are caused to adhere tightly to each other are portions that are difficult to flatten (smooth) by ordinary means (grinding, polishing or the like), a sheet containing a joining assistant agent may be inserted. As a result of the performance of such treatments, the joining efficiency of the core members to each other when the core members are heated and/or pressed is improved, so that a ceramic frame with an integral shape which has a higher mechanical strength can be manufactured. Furthermore, since joining can be accomplished by a heat treatment at a lower temperature, a dental frame with higher dimensional precision can be manufactured. In other words, the heat shrinkage rate can be reduced.

Alternatively, the respective core members may also be formed using a ceramic forming material which contains the above-mentioned joining assistant agent (preferably in an amount corresponding to 10 wt% or less, e.g., 0.1 to 10 wt%, of the total amount of ceramic powder). If this method is used, a ceramic frame in which the mechanical strength of the joining portions is good and the dimensional precision is high can be manufactured.

In regard to the conditions under which the core members are heated and/or pressed, the frame construction as a whole may be heated, or only the portions containing the portions that are to be joined may be partially heated and/or pressed. For example, spot heating of the portions containing the portions of two or more core members disposed in series that are to be caused to adhere tightly to each other by spot heating means such as (for example) high-frequency electromagnetic waves (microwaves) or the like is preferable.

Furthermore, a dental prosthesis which is constructed mainly from the dental ceramic frame disclosed in the present specification is provided as another aspect of the present invention. For example, bridges in which the crown parts or the like are formed by the application of various types of porcelain materials and/or resins to at least portions of the surface of the ceramic frame may be appropriately provided.

### BRIEF DESCRIPTION OF THE DRAWINGS

Fig. 1 is a front view which shows the external shape of one example of a dental ceramic frame disclosed herein;
Fig. 2 is an explanatory diagram which shows in model form one step included in one example of a dental ceramic frame manufacturing method disclosed herein;
Fig. 3 is an explanatory diagram which shows in model form the conditions under which a fatigue test was performed for one example of a dental ceramic frame disclosed herein;
Fig. 4 is a front view which shows the external shape of one example of a dental prosthesis (bridge) disclosed herein;
Fig. 5 is a sectional view which shows the internal construction of one example of a dental prosthesis (bridge) disclosed herein; and
Fig. 6 is an explanatory diagram which shows in model form one step included in one example of a dental ceramic frame manufacturing method disclosed herein.

### BEST MODE FOR CARRYING OUT THE INVENTION

Preferred embodiments of the present invention will be described below.

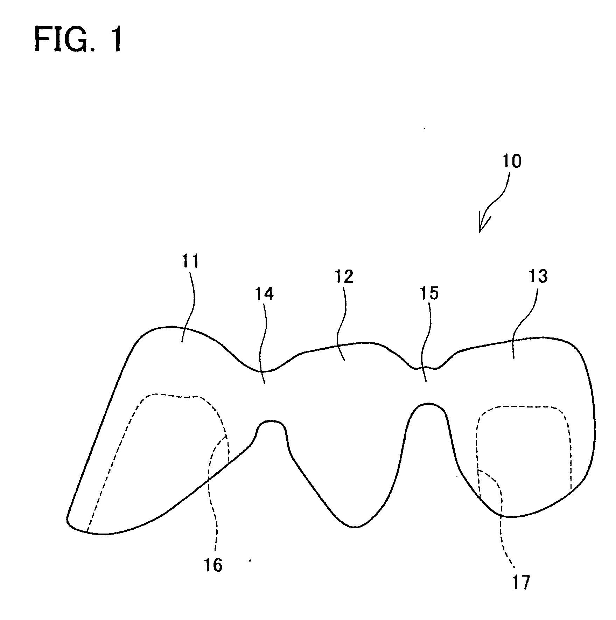

The dental ceramic frame disclosed in the present specification is constructed by disposing two or more ceramic core element in series; this frame is formed as an integral unit by joining the adjacent core elements to each other. As long as the content of the glass (amorphous) component in the joining portions is 10 wt% or less (preferably 5 wt% or less, and even more preferably 1 wt% or less), the dental ceramic frame is not limited to a fixed composition or shape. For example, the ceramic frame 10 used to construct a three-crown bridge for mounting in the lower jaw as shown in Fig. 1 is a typical example of the ceramic frame of the present invention. This figure is a front view of the frame as seen from the outside of the oral cavity.

In Fig. 1, the symbols 11, 12 and 13 respectively indicate independent core elements. Mounting holes 16 and 17 which are used to insert the corresponding portions of the supporting teeth (abutment teeth) are formed in the left and right core elements 11 and 13. The central element 12 is a portion which serves as a base for forming a missing tooth (pontic).

In this dental ceramic frame 10, the joining portions 14 and 15 corresponding to the boundaries of the respective core elements form an integral unit with the respective core elements 11, 12 and 13. Furthermore, since the joining portions contain substantially no glass component, or have a very low glass content even if these parts do contain a glass component (10 wt% or less and preferably 5 wt% or less, e.g., 0.01 to 5 wt%, of the joining portions), the frame is superior in terms of mechanical strength.

The dental ceramic frame disclosed herein is manufactured by individually forming core members that individually constitute core elements (typically members that constitute the cores of individual crowns in a bridge) into specified shapes, and then joining these core members to form an integral unit. This is typically accomplished by diffusion joining. One example of a preferred dental ceramic frame manufacturing method of the present invention will be described in the following.

There are no particular restrictions on the material that is used to form the dental ceramic frame (i.e., the individual core members), as long as this material is a material that comprises mainly a ceramic powder conventionally used in the manufacture of dental ceramic frames. A material in which the content of the glass component is small is desirable. In particular, a material which contains substantially no oxide glasses that contain alkali components, e.g., oxide glasses consisting chiefly of K₂O, Al₂O₃ and SiO₂ (K₂O-Al₂O₃-SiO₂ type glasses), oxide glasses consisting chiefly of K₂O, Na₂O, Al₂O₃ and SiO₂ (K₂O-Na₂O-Al₂O₃-SiO₂ type glasses), oxide glasses consisting chiefly of K₂O, Na₂O, Al₂O₃, B₂O₃ and SiO₂ (K₂O-Na₂O-Al₂O₃-B₂O₃-SiO₂ type glasses) or oxide glasses consisting chiefly of K₂O, Na₂O, CaO, Al₂O₃, B₂O₃ and SiO₂ (K₂O-Na₂O-CaO-Al₂O₃-B₂O₃-SiO₂ type glasses) (i.e., in which the content of such glasses is 0 to 1 wt%) is desirable.

Examples of ceramic powders which can be used to form the main ingredient of the ceramic frame forming material include alumina (Al₂O₃), zirconia (ZrO₂), Al₂O₃ with added magnesia (MgO), silicon nitride (Si₃N₄), sialon, titanium nitride (TiN), silicon carbide (SiC) and the like. In cases where zirconia is used as the main component of the ceramic frame forming material, it is desirable that a compound which functions as a stabilizing agent of the ceramic molding in the high-temperature phase during firing, such as yttrium oxide (Y₂O₃), calcium oxide (CaO), magnesium oxide (MgO) or cerium oxide (CeO₂), be added in an amount equal to several molar percent (in terms of molar percentage) of the ceramic frame forming material.

In addition, auxiliary components that have conventionally been added to ceramic frame forming materials as necessary, e.g., coloring agents, viscosity adjusting agents, fragrances, surfactants, preservatives, pH adjusting agents and the like, may be added in appropriate amounts.

A desirable ceramic frame forming material is a material to which the above-mentioned joining assistant agent is added. Such joining assistant agents are compounds which have an action that can contribute to an increase in the density of the texture of a molding consisting of a ceramic powder, and that can promote the joining reaction (typically diffusion joining) even at relatively low temperatures. Examples of desirable joining assistant agents include titanium oxide (TiO₂), silicon oxide (SiO₂), niobium oxide (Nb₂O₅) and germanium oxide (GeO₂). A material to which such a joining assistant agent is added in an amount corresponding to approximately 10 wt% or less (typically 0.1 to 10 wt%, and preferably 1 to 10 wt%) of the total amount of the ceramic powder is desirable. For example, a ceramic frame forming material comprising mainly powdered ZrO₂, to which powdered TiO₂ and/or powdered SiO₂ in an amount corresponding 1 to 10 wt% of the total amount of powdered ZrO₂ is added, or to which powdered Nb₂O₅ and/or powdered GeO₂ in an amount corresponding to 1 to 5 wt% of the total amount of powdered ZrO₂ is added, is desirable.

The formation of the core members can be accomplished by various methods; however, in order to obtain a ceramic molded body with a dense structure, it is advisable to use a method in which a specified mold is filled with the above-mentioned ceramic frame forming material (powder), and this material is press-molded. For example, a ceramic molded body (green body) can be obtained by hydrostatic pressing or press-molding. It is not necessary that all of the core members that constitute the ceramic frame be formed from the same molding material. For example, in cases where a frame for a three-crown bridge is manufactured, the core members constituting the left and right core elements may be formed from a material with an Al₂O₃ base, and the core member constituting the central core element may be formed from a material with a ZrO₂ base or a composite material of Al₂O₃ and ZrO₂. Accordingly, the dental ceramic frame of the present invention contains a ceramic structural body consisting of a single material or a combination of two or more materials selected from the group consisting of ZrO₂, Al₂O₃, Al₂O₃ with added MgO, Al₂O₃-ZrO₂ composite materials, Al₂O₃-ZrO₂-Al₂TiO₅ composite materials, Al₂O₃-spinel (MgO-xAl₂O₃: x is a number of 1 or greater) composite materials, Si₃N₄, sialon, TiN and SiC.

The core members that have been molded into a specified shape by a press-molding process or the like may be arranged "as is" in series in order to form the core elements of the bridge; preferably, however, a sintering treatment is performed. Typically, in the case of a molded body comprising mainly Al₂O₃ or ZrO₂, heating (preliminary firing) is first performed for about 1 to 2 hours at a temperature of approximately 1000 to 1100°C. Following this sintering, it is desirable to perform a grinding/polishing treatment using a diamond grindstone or the like so that a precise core shape is obtained. Subsequently, a firing treatment using a high firing temperature of 1300 to 1500°C is typically performed.

The sintered bodies (core members) thus obtained may be disposed in series "as is"; preferably, however, grinding and/or polishing are performed using a diamond grindstone or the like so that the surfaces of the adjacent core members that face each other with the core members are disposed in series (i.e., the surfaces that contact each other when the core members are disposed in series; hereafter referred to as the "contact surfaces") are flattened. As a result, when a plurality of core members are disposed in series, the contact surfaces (surfaces that have been subjected to a flattening treatment) of two adjacent core members can easily be caused to adhere tightly to each other (i.e., can be caused to contact each other in a tightly adhering state).

It would also be possible to apply the above-mentioned joining assistant agent to the contact surfaces instead of performing such a flattening treatment, or in addition to performing such a flattening treatment. For example, it is desirable to thinly coat the contact surfaces with a preparation prepared by dispersing a powder-form joining assistant agent such as TiO₂ or the like (preferably a fine particle-form agent with a mean particle size of less than 0.1 µm as determined by the BET method or the like) or an organo-metal compound (e.g., a solution of titanium alkoxide) which functions as a joining assistant agent. As a result, the diffusion joining efficiency can be improved.

Two or more core members manufactured in this manner are disposed in series so that the contact surfaces of these core members adhere tightly to each other, and a heating and/or pressing treatment is performed. In the working of the present invention, it is sufficient if such a heating and/or pressing treatment causes the core members to be joined at the contact surfaces so that the respective core members are connected to form an integral unit; there are no particular restrictions on the treatment method or procedure. Typically, these core members are set in a specified pressure-resistant heat-resistant jig (e.g., a jig made of SiC) in a state in which the core members are disposed in series, and a joining treatment is performed for approximately from 10 minutes to 2 hours within a temperature range in which diffusion joining can be induced (e.g., approximately 1300 to 1500°C in the case of a ceramic comprising mainly Al₂O₃ or ZrO₂) and/or with a pressure applied that can induce diffusion joining (e.g., 10 to 50 MPa). For example, in the case of a ceramic comprising mainly ZrO₂, a treatment is preferably performed from 1400 to 1500°C and from 10 to 15 MPa. As a result, a dental ceramic frame which is formed by joining two or more core elements to each other to form an integral unit can be manufactured.

In the dental ceramic frame manufacturing method disclosed in the present specification, as was described above, individual core members are formed beforehand, and these core members are directly joined by physical or chemical means. Accordingly, the dimensions among the respective core members show almost no change, so that a ceramic frame with high dimensional precision and a dental prosthesis containing such a frame can be manufactured. In particular, since the ceramic frame forming material is selected so that the respective core members and joining portions as a whole have the same composition, the uniformity of the coefficient of thermal expansion among the core members is good, so that cracking and the like in the cooling process following the joining treatment can be prevented. As a result, a ceramic frame in which both high precision and a high mechanical strength are realized can be manufactured. Furthermore, in the dental ceramic frame manufacturing method of the present invention, since the core member formation step and the step in which a single frame is constructed by joining the plurality of core members obtained in the core member formation step to each other are separate, a dental ceramic frame can be manufactured with good efficiency and at a low cost.

The present invention will be described in greater detail below in terms of several examples. It is not intended that the present invention be limited to these examples.

### <Example 1>

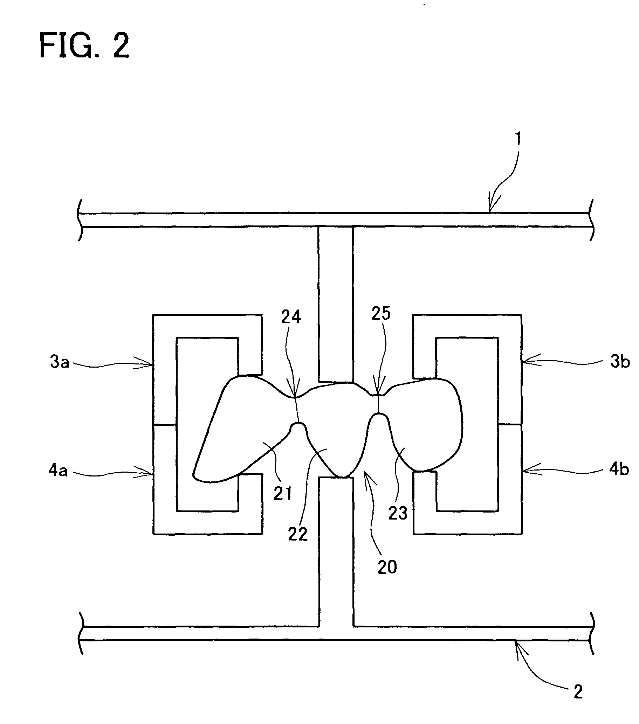

Core members were formed using powdered ZrO₂ containing 3 mol% Y₂O₃. Specifically, a specified mold was filled with powdered ZrO₂ containing Y₂O₃, and press-molding was performed at a pressure of 30 MPa. Next, cold hydrostatic press-molding was performed at a pressure of 100 MPa. The green molded bodies thus obtained were subjected to a preliminary firing treatment for 1 hour at 1000°C. Next, the preliminarily fired bodies thus obtained were ground using a diamond grindstone, thus producing the three core members 21, 22 and 23 shown in Fig. 2. Although this is not shown in the figures, mounting holes which allow the insertion of portions of the supporting teeth are formed in the left and right core members 21 and 23 shown in Fig. 2. Following this grinding treatment, a firing treatment was performed for 2 hours at 1400°C. As a result, core members 21, 22 and 23 with a dense structure having a relative density of 99.8% or greater were obtained. Next, the contact surfaces 24 and 25 of these core members were subjected to a grinding/polishing treatment using a diamond grindstone with a #400 grain size. As a result, the contact surfaces 24 and 25 of the respective core members were more or less completely flattened (see Fig. 2).

Next, as is shown in Fig. 2, the respective core members 21, 22 and 23 were set in SiC jigs 1, 2, 3a, 3b, 4a and 4b (attached to a creep tester disposed inside a furnace) in a state in which the core members were disposed in series in the horizontal direction with the contact surfaces 24 and 25 of the core members caused to adhere tightly to each other. Then, the furnace was heated to 1450°C. After the temperature inside the furnace became constant, the pressure was maintained at 10 MPa for 20 minutes. After this time had elapsed, the pressure was released, and the ceramic frame was cooled inside the furnace.

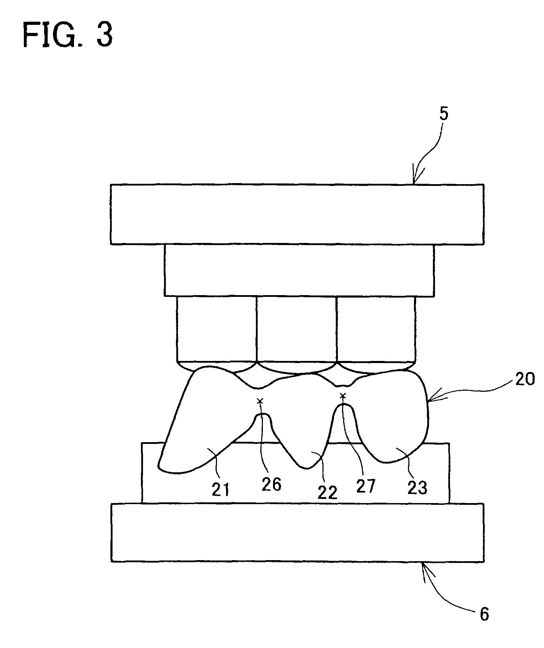

As is shown in Fig. 3, the portions of the ceramic frame 20 thus obtained that included the contact surfaces formed joining portions 26 and 27 that had the same composition as the core members (core elements) and that were constructed as integral units with the core members. Next, the ceramic frame 20 was mounted on jigs 5 and 6 that modeled supporting teeth (abutments), and a fatigue test that was repeated up to 10⁶ times was performed by pulsating load fatigue at a maximum stress of from 600 to 800 MPa, a frequency of 2 Hz and a stress ratio of 0. The presence or absence of fractures in the joining portions 26 and 27 was investigated. As a result, it was found that there was no fracturing of the joining portions at any stress level within the above-mentioned range up to 10⁶ times.

Similar results were also obtained for ceramic frames obtained by performing the same joining treatment in the atmosphere using various types of jigs constructed from Si₃N₄, mullite, Al₂O₃/GdAlO₃ type or Al₂O₃/YAG type MGC materials, platinum (Pt) or palladium (Pd) instead of the above-mentioned SiC jigs 1, 2, 3a, 3b, 4a and 4b.

Similar results were also obtained for ceramic frames obtained by performing the same joining treatment (1450°C, 10 MPa, 20 minutes) in a vacuum or inert gas atmosphere using various types of jigs constructed from graphite, tungsten (W), a cobalt (Co) - chromium (Cr) alloy, a nickel (Ni) super-alloy or an Ni-Cr alloy instead of the above-mentioned SiC jigs 1, 2, 3a, 3b, 4a and 4b.

Similar results were also obtained for ceramic frames obtained using various types of powdered ZrO₂ with a Y₂O₃ content of from 2 to 6 mol%, or powdered ZrO₂ containing CaO, MgO or CeO₂ as a stabilizing agent at an appropriate content instead of Y₂O₃.

### <Comparative Example 1>

The contact surfaces 24 and 25 of three core members 21, 22 and 23 manufactured in the same manner as in Example 1 were coated with a slurry containing a common lithium silicate type glass composition, and a joining treatment was performed by heating the core members to a temperature at which the glass composition melted. When the ceramic frame thus obtained was subjected to the same fatigue test as in Example 1 (see Fig. 3), the ceramic frame immediately fractured in a test performed at a maximum stress of 600 MPa.

### <Example 2>

The mechanical characteristics in an environment modeling the interior of the oral cavity were evaluated using the ceramic frame manufactured in Example 1.

Specifically, using the jigs 5 and 6 shown in Fig. 3, compression tests were respectively performed at a load rate of 0.005 mm/minute in the atmosphere at room temperature and in a physiological salt solution at 37°C, and the mechanical strength values of the joining portions 26 and 27 were compared. As a result, it was found that the strength in physiological saline at 37°C maintained a level of approximately 95 % of the strength in the atmosphere at room temperature. When tests were performed under the same conditions using the ceramic frame of Comparative Example 1, the strength in physiological saline at 37°C dropped to the level of approximately 80% of the strength in the atmosphere at room temperature.

It was confirmed from these experimental results that in the joining portions of the ceramic frame of Comparative Example 1, the mechanical strength in physiological saline at 37°C dropped greatly as a result of stress corrosion due to the inclusion of a lithium silicate glass component in large quantities. On the other hand, in the case of the ceramic frame of Example 1, it was confirmed that such stress corrosion did not occur since the joining portions did not contain a glass component in large quantities, and that a high mechanical strength was also maintained inside the oral cavity as a result.

### <Example 3>

An amount of TiO₂ corresponding to 5 wt% of the total amount of the powdered ZrO₂ containing Y₂O₃ used in Example 1 was mixed with this powdered ZrO₂ as a joining assistant agent. The same treatment as that performed in Example 1 was performed using this mixed powdered material, thus producing core members with a relative density of 99.8% or greater. After these core members were subjected to a flattening treatment in the same manner as in Example 1, a joining treatment was performed in the same manner as in Example 1 under the same load conditions, under several sets of temperature conditions selected from the range of from 1200 to 1450°C.

The respective ceramic frames of the same shape thus obtained were subjected to the same fatigue test as in Example 1. Specifically, the presence or absence of fracturing up to 10⁶ repetitions at a maximum stress of 600 MPa was investigated for respective ceramic frames with different joining temperatures (from 1200 to 1450°C).

As a result, compared to the ceramic frames obtained in Example 1, the ceramic frames formed from ceramic materials containing a joining assistant agent showed a high mechanical strength even in the case of frames that were subjected to a joining treatment at a relatively low temperature. For example, no fracturing occurred up to 10⁶ repetitions even in the case of a frame joined at 1350°C. It was confirmed from these results that appropriate diffusion joining that realizes a high mechanical strength can be obtained even in the case of a joining treatment (heating/pressing treatment) performed in a relatively low temperature range by adding an appropriate amount of a joining assistant agent such as TiO₂ or the like to the ceramic frame forming material.

When several ceramic frames were prepared with the amount of the above-mentioned TiO₂ that was added varied within the range of from 1 to 10 wt% of the total amount of the powdered ZrO₂ containing Y₂O₃, and the same fatigue test was performed, results similar to those obtained for the ceramic frames of Example 3 were obtained for all of these ceramic frames.

When ceramic frames were manufactured in the same manner as in Example 3 using ceramic frame forming materials containing an amount of SiO₂ corresponding to 1 to 9 wt% of the total amount of powdered ZrO₂ containing Y₂O₃, an amount of Nb₂O₅ corresponding to 1 to 5 wt% of the total amount of powdered ZrO₂ containing Y₂O₃ or an amount of GeO₂ corresponding to 1 to 5 wt% of the total amount of powdered ZrO₂ containing Y₂O₃ instead of the above-mentioned TiO₂, and a similar fatigue test was performed, all of the ceramic frames thus obtained showed results similar to those for the ceramic frame of Example 3.

### <Example 4>

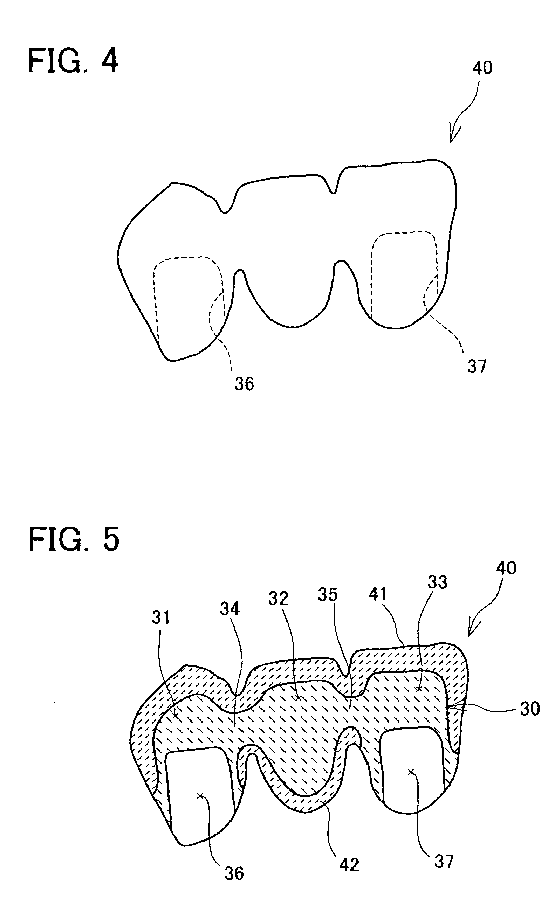

A three-crown bridge 40 of the type shown in Figs. 4 and 5, containing a dental ceramic frame of the present invention, was manufactured.

Specifically, a ceramic frame 30 for a three-crown bridge was manufactured by performing the same treatment as in Example 1. The joining portions 34 and 35 between the core elements 31, 32 and 33 of this ceramic frame 30 had the same composition as the respective core elements 31, 32 and 33, and were formed into an integral unit. Mounting holes 36 and 37 for the mounting of portions of the supporting teeth (not shown in the figures) were formed in the core elements 31 and 33 on both sides.

A zirconia porcelain material with thermal expansion properties matching those of the frame was applied to the surface of this ceramic frame 30 and fired. Specifically, the above-mentioned frame 30 was mounted in a working model, and a mixture prepared by mixing a powdered porcelain material with a composition of 60 to 70 wt% SiO₂, 9 to 13 wt% Al₂O₃, 0.5 to 1.0 wt% CaO, 0.3 to 0.6 wt% MgO, 6.0 to 8.0 wt% K₂O, 6.5 to 8.0 wt% Na₂O, 0.1 to 0.4 wt% Li₂O, 0.3 to 0.5 wt% B₂O₃, 0.5 to 6.5 wt% ZrO₂ and 0.1 to 1.5 wt% pigment with a common liquid (water in this case) was applied to this frame 30 using a brush while a desired shape was formed (see symbols 41 and 42 in Fig. 5). Next, filling was performed while condensation was performed so that there was no admixture of gas bubbles or the like. Following solidification, the ceramic frame 30 was removed from the working model together with the shaped mixture, and was transferred into a firing furnace. Then, a three-crown bridge 40 comprising the ceramic frame 30 and crown parts 41 and 42 formed on the surface thereof as shown in Figs. 4 and 5 was obtained by firing this assembly at approximately 700°C. Since the coefficients of thermal expansion of the crown parts 41 and 42 and frame 30 are more or less equal, this bridge 40 is superior in terms of dimensional precision, i.e., is formed with high precision.

### <Example 5>

An example of joining between core members by local (spot) heating will be described. Specifically, core members 51, 52 and 53 with a dense structure having a relative density of 99.8% or greater (for the purpose of constructing a ceramic frame for a three-crown bridge) were manufactured by performing the same treatment as in Example 1. The contact surfaces of these core members 54 and 55 were subjected to a grinding/polishing treatment using a diamond grindstone with a #400 grain size. As a result, the contact surfaces 54 and 55 of the respective core members were more or less completely flattened.

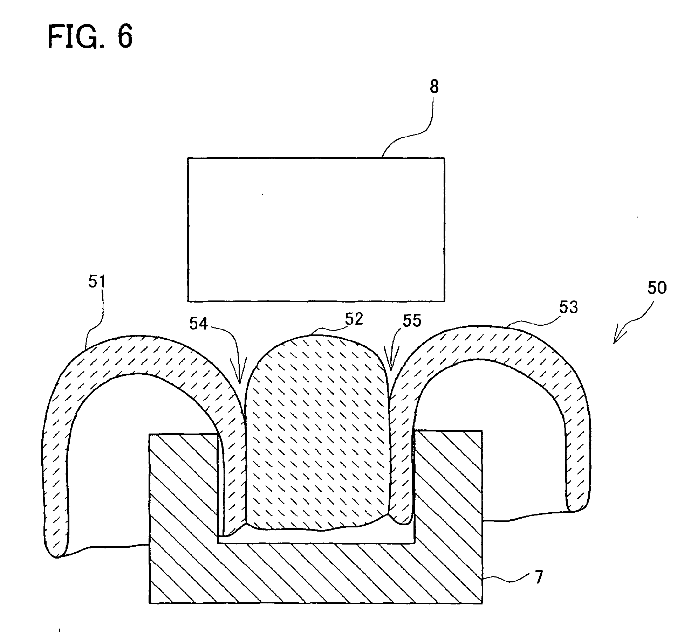

Next, as shown in Fig. 6, in a state in which the respective core members 51, 52 and 53 were disposed in series with the contact surfaces 54 and 55 of these core members caused to adhere tightly to each other, the core members were set in an alumina jig 7 placed inside a microwave heating furnace. In this case, the contact surfaces were pressed against each other. The spaces between the jig 7 and the respective core members 51, 52 and 53 were filled with coarse-grained alumina having a particle size of several microns (not shown in the figures), so that these core members 51, 52 and 53 were fastened to the jig 7.

As is shown in model form in Fig. 6, a microwave irradiation source 8 was disposed above this jig 7, and the portions including the central core member and the contact surfaces 54 and 55 on both sides of this central core member were irradiated with microwaves at 2.45 GHz, so that these portions were spot-heated. As a result of this partial heat treatment, diffusion joining occurred at both contact surfaces 54 and 55, so that a ceramic frame 50 in which the respective core members were joined into an integral unit was formed.

When the ceramic frame 50 thus obtained was subjected to 10⁶ repetitions of a fatigue test in the same manner as in Example 1 by pulsating load fatigue at a maximum stress of from 600 to 800 MPa, a frequency of 2 Hz and a stress ratio of 0, no fracturing occurred in the joining portions at any stress level up to 10⁶ repetitions.

Concrete examples of the present invention were described above; however, these are merely examples, and do not limit the scope of the claims. The techniques described in the scope of the claims include various modifications and alterations of the concrete examples described above.

The technical elements described in the present specification or drawings show technical utility either singly or in various combinations, and are not limited to the combinations described in the claims at the time of the filing of the present application. Moreover, the techniques described as examples in the present specification or drawings simultaneously achieve a plurality of objects, and have technical utility by virtue of the achievement itself of a single object among these objects.

## Claims

1. A dental ceramic frame comprising two or more core elements arranged in series, **characterized in that** adjacent core elements are joined to each other to form an integral unit, and the content of the glass component in the joining portions between these core elements is 10 wt% or less.

2. The dental ceramic frame according to claim 1, **characterized in that** said joining portions contain substantially no Na, K, Li or B as glass components.

3. The dental ceramic frame according to claim 1, **characterized in that** at least said joining portion contain one or more metal oxides that can assist in joining between ceramics.

4. The dental ceramic frame according to claim 3, **characterized in that** said metal oxides include one or more oxides selected from the group consisting of titanium oxide, silicon oxide, niobium oxide and germanium oxide.

5. The dental ceramic frame according to claim 4, **characterized in that** the frame is constructed using one or more ceramics selected from the group consisting of zirconia, alumina, mullite and spinel as the main component.

6. The dental ceramic frame according to claim 5, **characterized in that** said two or more core elements and the joining portions formed between these core elements all have substantially the same composition.

7. A dental ceramic frame forming material comprising mainly a ceramic powder, **characterized in that** the material contains one or more joining assistant agents capable of assisting in joining ceramic structures at a content corresponding to 0.1 to 10 wt % of the total amount of the ceramic powder.

8. The material according to claim 7, **characterized in that** said joining assistant agent is one or more compounds selected from the group consisting of titanium oxide, silicon oxide, niobium oxide and germanium oxide.

9. A method for manufacturing a dental ceramic frame having one or more core elements disposed in series, **characterized in that** said method comprises the steps of:
(a) individually preparing two or more ceramic core members;
(b) disposing these core members in series so that at least portions of the facing surfaces of adjacent core members adhere tightly to each other; and
(c) joining the two or more core members disposed in series to each other by heating and/or pressing these core members to form an integral unit.

10. The method according to claim 9, **characterized in that** a treatment which flattens the surfaces of said core members that are caused to adhere tightly to each other is performed before said core members are disposed in series.

11. The method according to claim 9, **characterized in that** a treatment in which one or more joining assistant agents that are capable of assisting in joining between ceramic structures are applied to the surfaces of said core members that are caused to adhere tightly to each other is performed before said core members are disposed in series.

12. The method according to claim 9, **characterized in that** said core members are manufactured using a material which contains a ceramic powder and one or more joining assistant agents capable of assisting in joining between ceramic structures in an amount corresponding to 0.1 to 10 wt% of the total amount of said ceramic powder.

13. The method according to claim 11 or 12, **characterized in that** said joining assistant agent is one or more compounds selected from the group consisting of titanium oxide, silicon oxide, niobium oxide and germanium oxide.

14. The method according to claim 9, **characterized in that** the portions of said two or more core members disposed in series that are caused to adhere tightly to each other are spot-heated in said step (c).

15. A dental prosthesis **characterized by** comprising the dental ceramic frame according to any one of claims 1 through 6.

16. The dental prosthesis according to claim 15, **characterized in that** a crown part is formed by applying at least a porcelain material or a resin, or both to at least portions of the surface of said ceramic frame.

17. The dental prosthesis according to claim 15, **characterized in that** said ceramic frame has at least one core element in which a mounting hole for the insertion of at least a portion of a supporting tooth is formed, and at least one core element having a pontic formed on the surface thereof.
